# EUROPEAN PATENT APPLICATION

(11) **EP 4 794 075 A1**
(43) Date of publication of application: **19.08.2026**
(21) Application number: 25172101.5
(22) Date of filing: 24.04.2025
(51) Int. Cl.: H01M 50/204, H01M 50/242, H01M 50/244, H01M 50/247

(54) **BATTERY PACK**

(30) Priority: 17.02.2025 CN 202520255817 U
(71) Applicant: Nanjing Chervon Industry Co., Ltd., Nanjing, Jiangsu 211106 (CN)
(72) Inventor: LIU, Xiaopan, Nanjing (CN)
(74) Representative: Sun, Yiming

(57) **Abstract**

A battery pack includes: a housing; multiple cells disposed in the housing; and a coupling portion configured to be coupled to an electrical device to transmit electrical energy. The coupling portion includes: a terminal assembly configured to be electrically coupled to the electrical device; and a support portion supporting at least the connection between the electrical device and the battery pack, where the support portion includes a support cavity and a reinforcing member accommodated in the support cavity, and the reinforcing member is an independent prefabricated member and is made of the same material as the housing.

## Description

### TECHNICAL FIELD

The present application relates to the technical field of power tools and, in particular, to a battery pack.

### BACKGROUND

Currently, most of tools widely used in various scenarios such as gardening and construction rely on lithium batteries for energy supply. In lithium battery technologies, safety is a key point, which encompasses safety at the micro level and safety at the macro level. For example, the safety at the micro level may be related to the materials of the positive and negative electrode of a cell, and the safety at the macro level may involve waterproofing, insulation, heat dissipation, fireproofing, extrusion resistance, and drop prevention. To improve the overall performance of a battery pack and enhance the adaptability of the battery pack for power tools to harsh working conditions, it is necessary to consider the preceding multiple factors comprehensively.

This part provides background information related to the present application, and the background information is not necessarily the existing art.

### SUMMARY

An object of the present application is to solve or at least alleviate part or all of the preceding problems. Therefore, the present application provides a battery pack. The present application adopts the technical solutions below.

A battery pack includes: a housing; multiple cells disposed in the housing; and a coupling portion configured to be coupled to an electrical device to transmit electrical energy. The coupling portion includes: a terminal assembly configured to be electrically coupled to the electrical device; and a support portion supporting at least the connection between the electrical device and the battery pack, where the support portion includes a support cavity and a reinforcing member accommodated in the support cavity, and the reinforcing member is an independent prefabricated member and is made of the same material as the housing.

In some examples, the reinforcing member is different from a reinforcing rib structure formed by integrally extending on an inner wall of the support cavity.

In some examples, the reinforcing member is embedded in the support cavity.

In some examples, the reinforcing member has an interference fit with the support cavity.

In some examples, the reinforcing member is configured to be a solid structure.

In some examples, the reinforcing member is configured to be a porous structure.

In some examples, the length of the reinforcing member is substantially the same as the length of the support cavity.

In some examples, the length of the support cavity ranges between 40 mm and 250 mm.

In some examples, the support cavity is formed in the housing.

In some examples, the support cavity is a cavity formed in the support portion.

In some examples, the reinforcing member includes a first member and a second member, and the first member and the second member are embedded in the support cavity separately.

In some examples, the terminal assembly is at least partially disposed between support portions.

In some examples, at least one side groove wall of the support portion is recessed inwardly to form a mounting rail, the mounting rail guides the battery pack when the battery pack is mounted to the electrical device, and the reinforcing member is fixed on the peripheral side of the mounting rail.

In some examples, the weight of the battery pack is greater than or equal to 1 kg.

In some examples, the coupling portion of the battery pack is detachably connected to a battery mounting portion of the electrical device.

A battery pack includes: a housing; multiple cells disposed in the housing; and a coupling portion configured to be coupled to an electrical device to transmit electrical energy. The coupling portion includes: a terminal assembly configured to be electrically coupled to the electrical device; and a support portion supporting at least the connection between the electrical device and the battery pack, where the support portion includes a support cavity and a reinforcing member accommodated in the support cavity, and the reinforcing member is made of the same material as the housing.

A battery pack applicable to a power tool includes: a housing; multiple cells disposed in the housing; and a coupling portion configured to be detachably connected and coupled to the power tool. The coupling portion includes: a terminal assembly configured to be capable of being electrically coupled to the power tool; and a support portion capable of supporting at least the connection between the power tool and the battery pack, where the support portion includes a support cavity and a reinforcing member accommodated in the support cavity, and the reinforcing member is made of the same material as the support cavity.

In some examples, the reinforcing member is an independent prefabricated member and is different from a reinforcing rib structure formed by integrally extending on an inner wall of the support cavity.

In some examples, the support cavity is a cavity formed in the support portion, and the reinforcing member is mounted in the cavity.

In some examples, the weight of the battery pack is greater than or equal to 1 kg.

In some examples, the material of the reinforcing member includes at least one of polypropylene (PP), polycarbonate (PC) plus acrylonitrile butadiene styrene plastic (ABS), PC plus nylon, or another PC composite material.

### BRIEF DESCRIPTION OF DRAWINGS

FIG. 1 is a structural view of a battery pack as an example of the present application;
FIG. 2 is a schematic view illustrating a scenario in which a battery pack powers power tools in the present application;
FIG. 3 is a perspective view of some internal structures of the battery pack shown in FIG. 1 with a housing removed;
FIG. 4 is a side perspective view of the battery pack shown in FIG. 1; and
FIG. 5 is a partial sectional view of some structures of the battery pack shown in FIG. 1.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

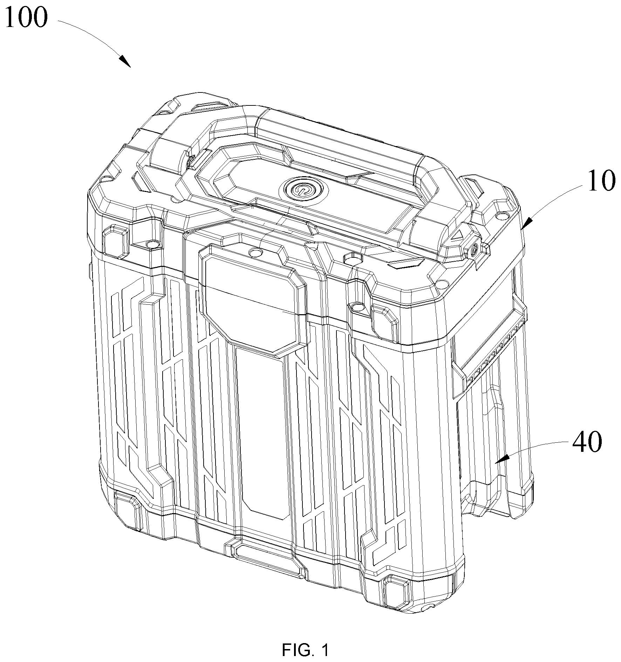

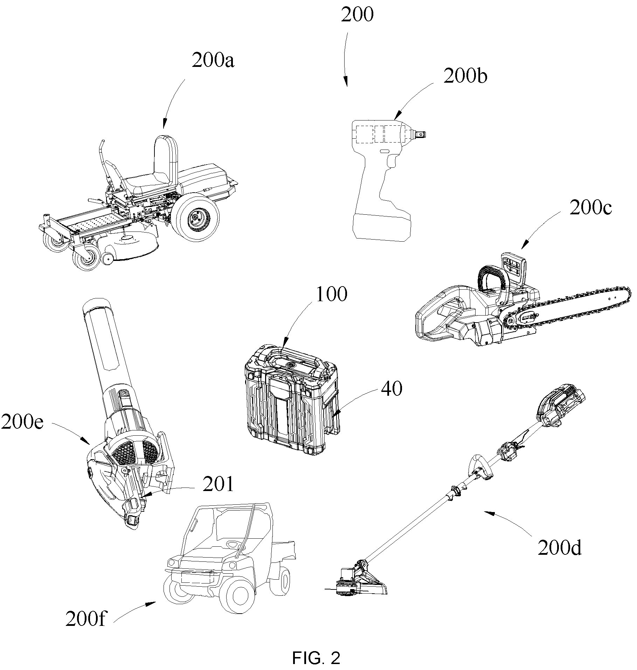

As shown in FIGS. 1 and 2, the present application mainly provides a battery pack 100. The battery pack 100 powers an electrical device and transmits electrical energy to the electrical device so that an electrical component in the electrical device is powered on. In this example, the electrical device is a power tool 200. For example, the battery pack 100 is a battery pack applicable to the power tool 200. The battery pack 100 can be detachably connected to the power tool 200 to power the power tool 200. The related design needs to meet requirements of various working conditions of the power tool 200.

Referring to FIG. 2, power tools 200 powered by the battery pack 100 of the present application may be of various different types, including, but not limited to, a riding mower 200a, a wrench 200b, a chainsaw 200c, a string trimmer 200d, a blower 200e, and an all-terrain vehicle 200f shown in FIG. 2. In some examples, the power tool 200 powered by the battery pack 100 of the present application may include a handheld power tool, including a hedge trimmer, an electric circular saw, or the like. In some examples, the power tool 200 powered by the battery pack 100 of the present application may include a table tool, including a miter saw, a metal cutter, or the like. In some examples, the power tool 200 powered by the battery pack 100 of the present application may include a push tool or a riding tool, including a push mower, a push snow thrower, a riding mower, a stand-on mower, or the like. In some examples, the power tool 200 powered by the battery pack 100 of the present application may include an outdoor wheeled tool, including an outdoor electric vehicle such as a farmer's vehicle or a golf cart. In some examples, the power tool 200 powered by the battery pack 100 of the present application may include a robotic tool, including a robotic mower, a robotic snow thrower, or the like. Alternatively, in some examples, the power tool 200 may be a garden tool, such as a hedge trimmer, a blower, a mower, or a string trimmer. In some examples, the power tool 200 may be a decorating tool, including a screwdriver, an electric drill, a nail gun, a glue gun, a sander, an electric circular saw, or the like. In some examples, the power tool 200 may be a cleaning tool, including a blower, a snow thrower, a cleaning machine, or the like. Alternatively, in some examples, the power tool 200 may be a cutting tool, including a reciprocating saw, a jigsaw, an electric circular saw, a chainsaw, or the like. In some examples, the power tool 200 may be a fastening tool, including an electric drill, a screwdriver, an electric hammer, or the like. In some examples, the power tool 200 may be a sanding tool, including an angle grinder, a sander, or the like. In some examples, the power tool 200 may be another tool, such as an electric lamp, a fan, or the like. It is to be understood that on the premise that the characteristics are not contradictory, more types of power tools 200 that are powered by the battery pack 100 of the present application and have not been shown above may exist.

The power tool 200 generally has a battery mounting portion 201 to which the battery pack 100 can be detachably connected. The battery mounting portions 201 of different power tools 200 may have different specific positions and structures. The arrangements of structures in different power tools 200 are also different. The riding mower is used as an example. The riding mower generally has a frame, a walking assembly including at least walking wheels and a walking motor, and a cutting assembly including at least a blade and a cutting motor. The battery mounting portion 201 is generally located at the front or rear portion of the frame. The details are not repeated here.

In some examples, the electrical device may include some energy conversion devices such as an adapter or an inverter and can convert the electrical energy outputted from the battery pack 100 to power other power tools 200.

In some examples, the nominal voltage of the battery pack 100 is higher than or equal to 56 V. In some examples, alternatively, the nominal voltage of the battery pack 100 is higher than or equal to 50 V. In some examples, alternatively, the nominal voltage of the battery pack 100 is higher than or equal to 48 V. In some examples, alternatively, the nominal voltage of the battery pack 100 is higher than or equal to 40 V. In some examples, alternatively, the nominal voltage of the battery pack 100 is higher than or equal to 36 V. In some examples, alternatively, the nominal voltage of the battery pack 100 is higher than or equal to 30 V. In some examples, alternatively, the nominal voltage of the battery pack 100 is higher than or equal to 20 V. In some examples, alternatively, the nominal voltage of the battery pack 100 is higher than or equal to 10 V.

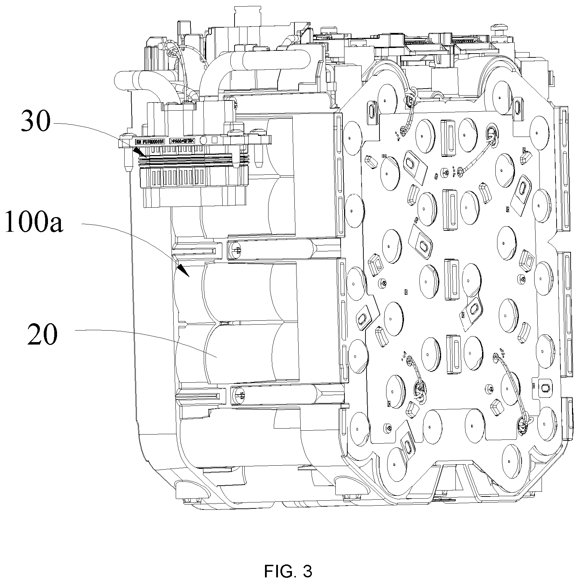

Referring to FIGS. 1 and 3, the battery pack 100 includes a housing 10 and multiple cells 20. The cells 20 are components for storing electrical energy in the battery pack 100. In some examples, the cells 20 may be cylindrical batteries, square batteries, or pouch cells. In some examples, the cells 20 may be single-tab batteries, double-tab batteries, multi-tab batteries, or full-tab batteries. In some examples, the preceding cells 20 may be lithium iron phosphate cells or ternary lithium cells. In some examples, the preceding cells 20 may be sodium-ion cells. In some examples, the characteristics of the multiple cells 20 in the battery pack 100 may be different or partially different. The specific number of cells 20 in the battery pack 100 is adjustable within a certain range. The multiple cells 20 may constitute one or more cell modules 100a.

In some examples, each of the cells 20 is configured to be a cylindrical 18650 cell 20 (with a diameter of 18 mm and a length of 65 mm). In other examples, each of the cells 20 is configured to be a cylindrical 14500 cell 20 (with a diameter of 14 mm and a length of 50 mm), a cylindrical 14650 cell 20 (with a diameter 14 mm and a length of 65 mm), a cylindrical 17500 cell 20 (with a diameter of 17 mm and a length of 50 mm), a cylindrical 17670 cell 20 (with a diameter of 17 mm and a length of 67 mm), a cylindrical 18500 cell 20 (with a diameter of 18 mm and a length of 50 mm), a cylindrical 26650 cell 20 (with a diameter of 26 mm and a length of 65 mm), a cylindrical 26700 cell 20 (with a diameter of 26 mm and a length of 70 mm), or the like. Each cell 20 may be generally cylindrical and may extend along the axis of the cell and be parallel to a cylindrical outer cell wall. In some examples, in the battery pack 100, each cell 20 may have a length greater than or equal to twice the diameter of the cell 20. In some examples, the cell 20 is configured to be a lithium-based prismatic cell 20 (for example, the cell 20 has a battery capacity between 1.0 ampere-hour ("Ah") and 10.0 Ah). The cell 20 has a length of about 50 mm to about 80 mm, a width of about 60 mm to about 90 mm, and a height of about 3 mm to about 8 mm. In some examples, the battery pack includes a configuration such as a wound configuration, a wound and flattened configuration, a wound and folded configuration, or a layered and folded configuration to form the prismatic cell 20.

In this example, each cell 20 has a positive electrode and a negative electrode. In the same cell module 100a, cells 20 are electrically connected in series, in parallel, or in series and parallel by using a cell 20 as a unit. Different cell modules 100a are electrically connected in series or in parallel by using a cell module as a unit. Finally, the total positive electrode of the battery pack 100 and the total negative electrode of the battery pack 100 may be formed. That is, the total positive terminal of the battery pack 100 and the total negative terminal of the battery pack 100 are formed to receive power from the outside and feed power to the outside and belong to a terminal assembly 30 of the battery pack 100.

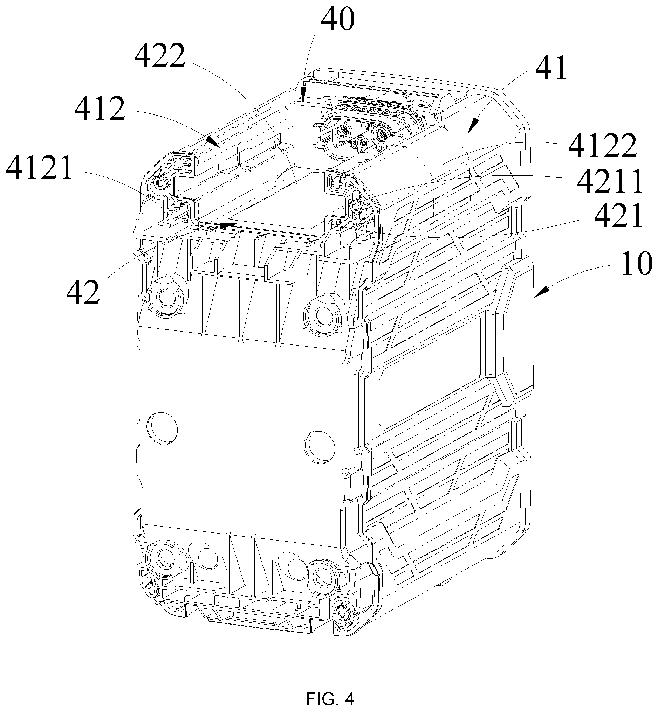

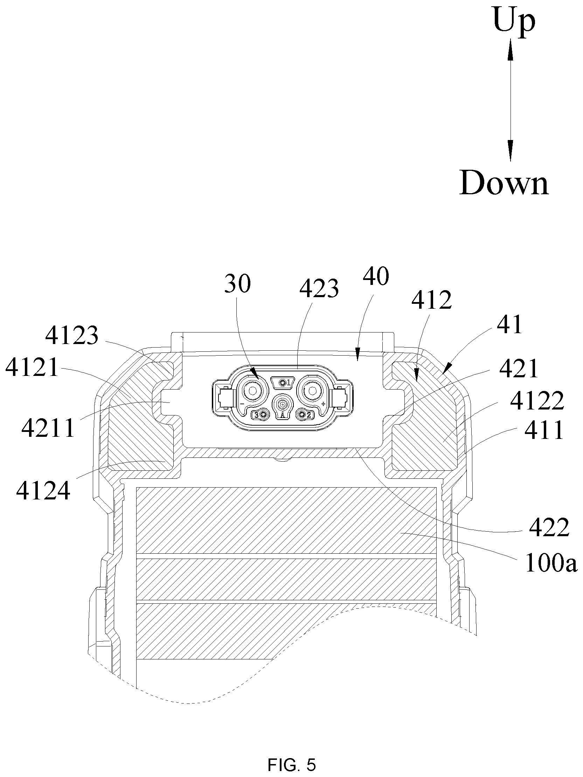

As shown in FIGS. 4 and 5, the battery pack 100 includes a coupling portion 40. The coupling portion 40 is coupled to the electrical device to transmit electrical energy. For example, the coupling portion 40 of the battery pack is detachably connected to the battery mounting portion 201 of the power tool 200. When the coupling portion 40 of the battery pack is coupled to the battery mounting portion 201 of the power tool 200, the electrical energy in the cells 20 is transmitted into the power tool 200 through the coupling portion 40. The coupling portion 40 is at least partially disposed in the housing 10. The coupling portion 40 includes the terminal assembly 30 and a support portion 41. The terminal assembly 30 is electrically coupled to the electrical device. The terminal assembly 30 includes the preceding total positive terminal of the battery pack 100 and the preceding total negative terminal of the battery pack 100 that receive power from the outside and feed power to the outside.

The support portion 41 supports at least the connection between the electrical device and the battery pack 100. In some examples, the support portion 41 supports the battery pack 100 on the power tool 200. In addition, the support portion 41 connects the battery pack 100 to or releases the battery pack 100 from the battery mounting portion 201 of the power tool 200. The support portion 41 is at least partially formed in the housing 10. The support portion 41 includes a support cavity 411 and a reinforcing member 412 accommodated in the support cavity 411. The reinforcing member 412 is made of the same material as the housing 10. The reinforcing member 412 is an independent prefabricated member and is different from a reinforcing rib structure formed by integrally extending on an inner wall of the support cavity 41. The support cavity is formed in the support portion, that is to say, the support cavity is a cavity structure formed in the housing of the support portion.

When the battery pack 100 is mounted to the electric device or the power tool 200 and put into use, the support portion 41 plays a vital role. The support portion 41 is not only a vital component connecting the power tool 200 to the battery pack 100 but also mates with a locking structure of the battery pack 100 to ensure that the battery pack 100 can be stably retained on the power tool 200. However, during actual use of the power tool 200, especially in a vibration or bumpy environment, the weight of the battery pack 100 generates an additional load on the connecting structure thereof. If the strength of the support portion 41 is insufficient, the support portion 41 may be damaged, and even the battery pack 100 is caused to fall off the power tool 200. This problem not only influences the normal use of the device but also may pose a threat to the safety of a user.

In the related art, to enhance the strength of the support portion 41, a metal material is typically embedded in the support portion 41. The high strength and rigidity of the metal material can effectively improve the capability of the support portion 41 to bear a load, thereby avoiding the damage to the support portion 41 under vibration or impact. However, this design solves the strength problem but brings new challenges. In the recovery and treatment process of the battery pack 100, the battery pack 100 is a kind of waste requiring special treatment, and strict requirements are imposed on environmental friendliness. Embedding the metal material into the support portion 41 increases the difficulty in recycling the housing 10 of the battery pack because the metal material and a plastic material need to be separated from each other. This configuration not only reduces the recycling efficiency but also increases the recycling cost. In addition, the introduction of the metal material does not conform to the current concept of sustainable development of environment and may cause additional burdens on the environment.

In this example, considering various aspects such as the overall strength, economy, and environmental friendliness of the battery pack 100, the applicant configures the material of the reinforcing member 412 in the support cavity 411 to be the same as the material of the housing 10 of the battery pack. This design not only avoids embedding the metal material into the support portion 41 but also improves the strength of the support portion 41 by optimizing structural design. For example, the reinforcing member 412 may adopt the same high-strength engineering plastic as the housing 10 and is tightly combined with the support portion 41 through an injection molding process. This integrated design not only simplifies the manufacturing process but also significantly improves the overall strength of the support portion 41 so that the support portion 41 can effectively resist vibration and impact.

In addition, this design avoids an appearance defect caused by an excessive thickness in the injection molding process. In conventional design, to increase the strength of the support portion 41, an injection molding thickness may need to be increased, but this configuration may cause appearance problems such as an uneven surface or shrinkage. The reinforcing member 412 is embedded so that the strength can be improved without increasing the injection molding thickness, thereby ensuring the appearance quality and aesthetics of the battery pack 100.

For example, this design has significant advantages in recycling materials. Since the reinforcing member 412 and the housing 10 of the battery pack are made of the same material, the whole battery pack 100 can be directly recycled after being scrapped, and the metal and plastic materials do not need to be separated. Thus, this simplifies the recycling process, improves the recycling efficiency, reduces the negative influence on the environment, and conforms to the concept of sustainable development.

In this example, the material of the reinforcing member 412 and the material of the housing 10 of the battery pack are unified, which not only improves the strength of the support portion 41 but also takes the economy and the environmental friendliness into consideration. This design not only solves the recycling problem caused by metal embedding in the conventional technology but also provides a new idea for the overall performance optimization and sustainable development of the battery pack 100. With this innovative design, the battery pack 100 meets the demand for high strength and contributes to environmental protection and efficient utilization of resources.

In this example, at least one side surface of the housing 10 is provided with the coupling portion 40. The coupling portion 40 includes at least the terminal assembly 30, and the terminal assembly 30 is exposed outside the housing 10. In an example, referring to FIGS. 1, 4, and 5, a coupling groove 42 having a shape similar to an inverted "U" is formed between two support portions 41. The coupling groove 42 includes two opposite side groove walls 421 and a top end wall 422, and the opening of the coupling groove 42 faces the outer side of the battery pack 100. At least one side groove wall 421 of the coupling groove 42 is recessed inwardly to form a mounting rail 4211. The mounting rail 4211 can guide the battery pack 100 when the battery pack 100 is mounted to the electrical device. The terminal assembly 30 is mounted at one end of the coupling groove 42. In an example, a terminal mounting hole 423 is provided at one end of the housing 10, and the terminal assembly 30 may be mounted on the housing 10 through the terminal mounting hole 423. One end of the terminal assembly 30 can be disposed in the housing 10, and the other end of the terminal assembly 30 is exposed outside the housing 10. Therefore, a mounting gap exists between the terminal assembly 30 and the housing 10.

Referring to FIG. 5, the support cavity 411 of the support portion 41 is formed in the housing 10, and the reinforcing member 412 is embedded in the support cavity 411. In this example, the reinforcing member 412 is the independent prefabricated member and is different from the reinforcing rib structure formed by integrally extending on the inner wall of the support cavity 41. The reinforcing member 412 is mounted in the support cavity 411. For example, the reinforcing member 412 is embedded in the support cavity 411 through adhesion, attachment, fastening, or like. For example, the support cavity 411 is formed in the housing 10. The support cavity 411 includes a closed cavity enclosed by the housing 10 with a wall thickness, and the reinforcing member 412 is completely enclosed in the support cavity 411. In some examples, the support cavity 411 may be a semi-closed cavity, and the reinforcing member 412 is at least partially exposed outside the support cavity 411. In some examples, the reinforcing member 412 is at least partially exposed outside the housing 10. In some examples, the reinforcing member 412 has an interference fit with the support cavity 411 so that the gap between the reinforcing member 412 and a cavity wall of the support cavity 411 is reduced to increase the strength.

In this example, the support portion 41 is at least partially formed in the housing 10. The material of the housing 10 includes PP, PC plus ABS, PC plus nylon, or another PC composite material. For the reinforcing member 412, the material of the reinforcing member includes PP, PC plusABS, PC plus nylon, or another PC composite material. Moreover, the reinforcing member 412 is made of the same material as the housing 10. In some examples, the reinforcing member 412 includes nylon plus glass fiber (PA6 plus GF) to be flame-retardant. In this example, the reinforcing member 412 is configured to be a solid structure. The inside of the reinforcing member 412 is completely filled with a material with no cavity or void, thereby improving strength and rigidity. In some examples, the reinforcing member 412 may have a porous structure such as a honeycomb structure.

In this example, the reinforcing member 412 is constituted by a first member 4121 and a second member 4122. The first member 4121 and the second member 4122 have substantially identical structural designs and are symmetrically embedded in two independent support cavities 411, respectively. This symmetrical design not only makes the reinforcing member 412 more convenient to mount but also can ensure the balance and stability of the overall structure. The symmetrical distribution of the first member 4121 and the second member 4122 enables the first member 4121 and the second member 4122 to evenly share external loads when the first member 4121 and the second member 4122 are subjected to forces. Thus, damage caused by local stress concentration is effectively avoided. In addition, this design can also simplify the manufacturing and assembly process because the first member 4121 and the second member 4122 may adopt the same machining process and the same size standard, thereby reducing production costs and improving production efficiency.

The first member 4121 is used as an example. The specific structure of the reinforcing member 412 includes a first embedded end 4123 disposed on one side of the mounting rail and a second embedded end 4124 disposed on the other side of the mounting rail. The design of the two embedded ends enables the reinforcing member 412 to be securely fixed on the peripheral side of the mounting rail 4211. Specifically, the first embedded end 4123 and the second embedded end 4124 substantially surround the peripheral side of the mounting rail 4211 to form a tight wrapping structure. This design not only enhances the strength of the connection between the reinforcing member 412 and the mounting rail 4211 but also can effectively prevent the reinforcing member 412 from loosening or falling off in a mounting or use process.

For example, the mounting rail 4211 has a substantially U-shaped groove structure, and the first embedded end 4123 of the reinforcing member 412 and the second embedded end 4124 of the reinforcing member 412 form a groove structure substantially identical to the shape of the mounting rail 4211. This design with matched shapes enables the reinforcing member 412 to fit closely around the outer surface of the mounting rail 4211, thereby further improving the stability and reliability of the connection. In addition, this groove structure can also provide an additional support area for the reinforcing member 412, thereby enhancing the capabilities of the reinforcing member 412 to resist bending and torsion.

The support cavity 411 protrudes inwardly from the top end wall 422 of the coupling groove 42. In an up and down direction, the reinforcing member 412 is at least partially located on the lower side of the top end wall 422. This layout design enables the reinforcing member 412 to fully utilize the internal space of the coupling groove 42, thereby improving the strength and stability of the overall structure without increasing the size of the overall structure. In addition, this design can also ensure that the mounted reinforcing member 412 does not protrude from the external profile of the coupling groove 42, thereby maintaining the aesthetics and compactness of the overall structure.

The reinforcing member 412 in this example achieves an efficient, stable, and reliable connection through the symmetrical design of the first member 4121 and the second member 4122, the tight wrapping structure of the first embedded end 4123 and the second embedded end 4124, and a precise match between the mounting rail 4211 and the support cavity 411. This design not only simplifies a mounting process but also significantly enhances the strength and stability of the overall structure, thereby meeting the demands for high performance and high reliability in actual applications.

In some examples, the first member 4121 and the second member 4122 are designed to have different structural features. This differentiated design is mainly intended to meet specific functional demands and facilitate mounting. For example, to ensure that the first member 4121 and the second member 4122 can be correctly assembled in the mounting process, different foolproof structures may be disposed on the first member 4121 and the second member 4122, respectively. The design with a foolproof structure is a common engineering optimization method and aims to avoid, through the limitation of a physical structure, misoperation that may occur in a mounting process. Specifically, the foolproof structure may include an asymmetric snap, a unique positioning slot, a specifically shaped interface, or the like. These designs enable the first member 4121 and the second member 4122 to be mounted only in correct directions and positions, thereby effectively avoiding assembly errors or damage caused by misoperation.

In addition, the structure of the support cavity 411 of the support portion 41 may be different due to functional demands. The support cavity 411 serves as a base for mounting the first member 4121 and the second member 4122. Therefore, the design of the internal structure of the support cavity 411 directly influences the mounting manner and stability of the components. Due to structural differences of the support cavity 411, the structures of the first member 4121 and the second member 4122 also need to be adjusted accordingly so that it is ensured that the first member 4121 and the second member 4122 can be perfectly matched with the support cavity 411. For example, if the internal profile of the support cavity 411 has specific geometric or size requirements, the shapes and sizes of the first member 4121 and the second member 4122 may also be precisely designed according to these requirements so that it is ensured that the mounted first member 4121 and the mounted second member 4122 can be stably fixed in the support cavity 411.

It is to be understood that the structural design of the first member 4121 and the structural design of the second member 4122 in the support cavity 411 are highly coordinated. The shapes and sizes of the first member 4121 and the second member 4122 are precisely adjusted according to the specific structure of the support cavity 411. This design not only ensures the mounting precision of the assembly but also improves the stability and functionality of the overall structure. Specifically, the outer surface of the first member 4121 and the outer surface of the second member 4122 fit closely around the inner wall of the support cavity 411, thereby making the mounted first member 4121 and the mounted second member 4122 less prone to loosen or shake. In addition, this fit design can also improve the contact area between the components, thereby further enhancing the firmness and reliability of the connection.

Furthermore, the structural differences of the first member 4121 and the second member 4122 may also be related to the functions of the first member 4121 and the second member 4122 in the whole device. For example, the first member 4121 may serve a main support function. Therefore, the structural design of the first member 4121 focuses more on strength and stability. The second member 4122 may more serve an auxiliary function such as adjustment or fixation. Therefore, the structural design of the second member 4122 may be more flexible or lightweight. This differentiated design not only optimizes the performance of the components but also improves the use efficiency of the overall device and prolongs the service life of the whole device.

In summary, the structural design of the first member 4121 and the second member 4122 directly reflects the structural design of the support cavity 411, and a close correspondence exists between the two. With such a coordinated design, the components can be precisely mounted and the functionality and reliability of the whole device can be ensured so that the diversified demands in actual applications are met.

In some examples, the first member 4121 and the second member 4122 are tightly connected to each other through a connecting structure, thereby forming an integral structure. This design not only simplifies the mounting process but also significantly enhances the stability and strength of the overall structure. Specifically, the first member 4121 and the second member 4122 are embedded into the support cavity 411 separately. The shapes and sizes of the first member 4121 and the second member 4122 are matched with the internal profile of the support cavity 411 so that precise positioning and stability in the mounting process are ensured. The first member 4121 and the second member 4122 are fixed together through a connector or the connecting structure (such as a bolt, a snap, or welding) so that the two form the inseparable integral structure. This integrated design not only reduces mounting steps but also avoids a structural failure caused by a loose or misaligned component.

In addition, the formation of such an integral structure further improves the mechanical properties of the whole device. For example, when the first member 4121 and the second member 4122 are subjected to an external load or vibration, the connection between the first member 4121 and the second member 4122 can effectively distribute stress and avoid the damage caused by the local stress concentration. In addition, the rigidity of the integral structure is also significantly enhanced, thereby improving the durability and reliability of the device. The first member 4121 and the second member 4122 are connected into the integral structure, which not only simplifies the mounting process but also significantly enhances the strength and stability of the overall structure. Thus, the demands for the high performance and the high reliability in actual applications are met.

In this example, the length of the support cavity 411 ranges between 40 mm and 250 mm. In some examples, the length of the support cavity 411 ranges between 100 mm and 250 mm. In some examples, the length of the support cavity 411 ranges between 130 mm and 250 mm. The length of the reinforcing member 412 is less than the length of the support cavity 411. In some examples, the length of the reinforcing member 412 is greater than the length of the support cavity 411. In some examples, the length of the reinforcing member 412 is substantially equal to the length of the support cavity 411.

In this example, the weight of the battery pack 100 is greater than or equal to 1 kg. In some examples, the weight of the battery pack 100 is greater than or equal to 1.5 kg. In some examples, the weight of the battery pack 100 is greater than or equal to 2 kg. In some examples, the weight of the battery pack 100 is greater than or equal to 2.5 kg. In some examples, the weight of the battery pack 100 is greater than or equal to 3 kg. In some examples, the weight of the battery pack 100 is greater than or equal to 3.5 kg. In some examples, the weight of the battery pack 100 is greater than or equal to 4 kg. In some examples, the weight of the battery pack 100 is greater than or equal to 4.5 kg. In some examples, the weight of the battery pack 100 is greater than or equal to 5 kg.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A battery pack (100), comprising:
a housing (10);
a plurality of cells (20) disposed in the housing; and
a coupling portion (40) configured to be coupled to an electrical device to transmit electrical energy;
wherein the coupling portion comprises:
a terminal assembly (30) configured to be electrically coupled to the electrical device; and
a support portion (41) providing a support for a connection between the electrical device and the battery pack, wherein the support portion comprises a support cavity (411) and a reinforcing member (412) accommodated in the support cavity, and the reinforcing member is an independent prefabricated member and is made of a same material as the housing.

2. The battery pack according to claim 1, wherein the reinforcing member is different from a reinforcing rib structure formed by integrally extending on an inner wall of the support cavity.

3. The battery pack according to claim 1, wherein the reinforcing member is embedded in the support cavity.

4. The battery pack according to claim 1, wherein the reinforcing member has an interference fit with the support cavity.

5. The battery pack according to claim 1, wherein the reinforcing member is configured to be a solid structure.

6. The battery pack according to claim 1, wherein the reinforcing member is configured to be a porous structure.

7. The battery pack according to claim 1, wherein a length of the reinforcing member is substantially the same as a length of the support cavity.

8. The battery pack according to claim 1, wherein a length of the support cavity ranges between 40 mm and 250 mm.

9. The battery pack according to claim 1, wherein the support cavity is formed in the housing.

10. The battery pack according to claim 1, wherein the support cavity is a cavity formed in the support portion.

11. The battery pack according to claim 1, wherein the reinforcing member comprises a first member (4121) and a second member (4122), and the first member and the second member are embedded in the support cavity separately.

12. The battery pack according to claim 1, wherein the terminal assembly is at least partially disposed between support portions.

13. The battery pack according to claim 1, wherein at least one side groove wall (421) of the support portion is recessed inwardly to form a mounting rail (4211), the mounting rail guides the battery pack when the battery pack is mounted to the electrical device, and the reinforcing member is fixed on a peripheral side of the mounting rail.

14. The battery pack according to claim 1, wherein a weight of the battery pack is greater than or equal to 1 kg.

15. The battery pack according to claim 1, wherein the coupling portion of the battery pack is detachably connected to a battery mounting portion (201) of the electrical device.
